# EUROPEAN PATENT SPECIFICATION

(11) **EP 2 105 051 B1**
(45) Date of publication and mention of the grant of the patent: **07.09.2011**
(21) Application number: 08153561.9
(22) Date of filing: 28.03.2008
(51) Int. Cl.: A21C 5/00, A21B 5/02

(54) **Flexible depositing system and method**
Flexibles Auftragungssystem und -Verfahren
Système et procédé de dépôt flexible

(43) Date of publication of application: 30.09.2009
(73) Proprietor: Nestec S.A., 1800 Vevey (CH)
(72) Inventor: DE ACUTIS, Rodolfo, YORK, Yorkshire YO26 4WX (GB); LEADBEATER, John Michael, Strensall, Yorkshire Y032 5AZ (GB)

(56) References cited:
- EP-A- 0 061 545
- EP-A- 0 169 917
- EP-A- 0 359 639
- EP-A- 0 665 051
- EP-A- 1 163 848
- WO-A-2004/032632
- DE-B1- 2 317 782
- US-A- 3 787 597
- US-A- 5 481 963
- US-A1- 2004 206 246
- US-B1- 6 170 540

## Description

### Field of the Invention

The present invention relates to the production of wafers and more particularly to the use of a flexible depositing system and method to enable versatility in the texture, colour or flavour of wafers during their production.

### Background of the Invention

Two basic types of wafer are described by K.F.Tiefenbacher in "Encyclopaedia of Food Science, Food Technology and Nutrition p 417-420 - Academic Press Ltd London - 1993":
1) No- or low-sugar wafers. The finished biscuits contain from zero to a low percentage of sucrose or other sugars. Typical products are flat and hollow wafer sheets, moulded cones or fancy shapes.
2) High-sugar wafers. More than 10% of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

Manufacturing no- or low-sugar wafers involves preparing a batter comprising a batter mix containing mainly flour and water to which other minor ingredients may be added. Typically 20 to 60% flour in batter is used in the manufacture of commercial no- or low-sugar wafers. Common formulations may also comprise at least one of the following ingredients: fat and/or oil, lecithin and/or emulsifiers, sugar, whole egg, salt, sodium bicarbonate, ammonium bicarbonate, skim milk powder, soy flour, yeast, and/or enzymes such as xylanases, proteases or alpha-amylase, for example.

In a common method of no- or low-sugar wafer manufacture, the batter is fed by pumping to a heated baking surface comprising a series of wafer baking moulds corresponding to the type of wafer desired, each wafer baking mould consisting of two heated engraved metal plates, also known as baking irons having upper and lower sections arranged to open and close, one of which may be moved relative to the other, The baking moulds are disposed one after the other, continuously circulating through a wafer oven by travelling from one end to the other and which are opened and closed in the front entrance of the wafer oven for the depositing of the batter and removal of the individual wafers. The wafer baking moulds pass through a baking oven for a determined time at a certain temperature, for instance 1-3 minutes at 140°C to 180°C, to produce large flat wafer sheets with a low moisture content.

In another method of manufacture of no- or low-sugar wafers described in copending EP Application No. 06119953.5, the wafer baking moulds are stationary and independent of the others in the wafer baking apparatus.The apparatus comprises at least two baking moulds, each having one pair of top and lower baking plates, said apparatus further comprising moving means for moving at least one plate relative to the other so that each baking mould can move from a closed configuration to an open configuration, heating means for heating the plates to a predetermined baking temperature, means for depositing on or injecting a predetermined quantity of dough between the baking plates of each mould and means for removing a baked wafer from a baking mould, characterized in that each baking mould is stationary in the apparatus and is independent from the other(s).

US 5,481,963 discloses an electric pancake maker having a liquid batter container that is thermally protected. Separate, equal portions of batter are simultaneously dispensed on a cooking surface by a metering pump. The pancakes are then cooked in a fully automatic manner. Batter preparation and mixing is not dicussed in this document.

For the production of hollow shaped wafers, the wafer sheet is obtained by baking the batter between shaped wafer baking plates, comprising a female plate and a male plate which between them, when placed together, form a space or cavity corresponding to the shaped wafer sheet.

After cooling, the wafers are processed according to the requirements of the final product. Wafers are baked products which are made from wafer batter and have crisp, brittle and fragile consistency. They are thin, with an overall thickness usually between < 1 mm and 8 mm and typical product densities range from 0.05 to 0.8 g/cm3. The surfaces are precisely formed, following the surface shape of the plates between which they were baked. They often carry a pattern on one surface or on both.

Sugar wafers cones need a concentration of more than 25% sucrose or other sugars in the product. Sugar wafer cones are commonly produced by baking oval or round wafer sheets between baking plates in a similar manner to no- or low-sugar wafers and then stripping the wafer off the plate and rolling it while still hot on tapered mandrels to form the finished cone.

Sugar wafers can also be produced in a continuous strip, such as by depositing sugar wafer batter onto a moving hot surface such as a heated metal band or drum. Typically sugar wafer strips are rolled when hot to form a tube, but other shapes are also possible. Such processes are described in US6254916 and US2004250692.

However, there are problems in wafer production because, if the batter formulation containing the common ingredients is prepared in advance, some additives are sensitive to the residence time in the batter and, if left too long in the batter before baking, are capable of reacting in the batter to give non-desired by-products which lead to disadvantages. Some examples are as follows:
1) Maltodextrins if left too long in a no- or low-sugar wafer batter would react with the intrinsic alpha and beta amylase of the flour in the batter to produce maltose resulting in a steady deterioration of the batter. Maltose would give a very high stickiness on the plate and the wafer would be difficult to release. Sticking wafers on an industrial automatic plant present a major problem as they are difficult to remove and end up being baked multiple times and spoiling a percentage of the oven's output until the oven is stopped and the plates cleaned.
2) Alpha Amylase, if left too long in the batter, would react in the batter with damaged starch resulting in a steady deterioration of the batter and give an extremely runny and liquid batter which results in a very fragile wafer.

It would therefore be advantageous to be able to prepare the basic batter mix composition comprising flour and water in advance and add the ingredients sensitive to the residence time (hereinafter referred to as "further batter ingredients") in the batter immediately before the batter is deposited onto the heated baking surface, e.g. less than about two minutes before depending on the further ingredient and on the flow rate. The advantages of adding these further ingredients are most apparent the shorter this period of time which is preferably as short as possible.

We have found that one or more desired further batter ingredients may be added to the batter mix at an injection point in the batter stream to form the batter immediately before the batter is deposited onto the heated baking surface and by fitting an in-line mixing device downstream of (or at) the injection point, the above disadvantages can be alleviated or overcome. The in-line mixer should rapidly mix in the further ingredients to form a homogeneous batter.

### Summary of the Present Invention

According to one embodiment of the present invention there is provided a method of preparing a wafer by baking a batter which comprises preparing a batter mix comprising at least flour and water, feeding the batter mix intermittently in a batter stream to a batter depositor which deposits batter onto a heated baking surface wherein at an injection point in the batter stream immediately upstream of the batter depositor, at least one further batter ingredient is added to the batter mix to form the batter, depositing a portion of the batter onto the heated baking surface to bake the batter in contact with the heated baking surface for a period of from 20 seconds to 5 minutes, at 130°C to 220°C to form the wafer, and removing the wafer from the heated baking surface characterized in that the batter is fed through an in-line mixing device fitted at or downstream of the injection point.

### Detailed Description of the Invention

When the heated baking surface is a wafer baking mould, this usually comprises two metal plates having upper and lower sections at least one of which is adapted to be moved relative to the other so that the baking mould can move from an open configuration for depositing the batter to a closed configuration for baking the batter and to an open configuration for removal of the baked wafers. Preferably the surface of one or both of the baking plates is engraved with a suitable pattern which is transferred to the surface of the wafer during baking.

The in-line mixing device should rapidly mix in the further ingredients to form a homogeneous batter and preferably, the in-line mixing device is a static mixer.

The further batter ingredient is added at the injection point in the batter stream by means of a dosing pump which is timed to run only when the batter feed pump runs.

The further batter ingredient is conveniently added to the batter mix at the injection point within 2 minutes of depositing the batter onto the heated baking surface, preferably within 60 seconds, more preferably within 30 seconds, and most preferably within 10 seconds before depositing onto the heated baking surface.

The duration of the baking of the batter is preferably from 20 seconds to 5 minutes, more preferably from 1 minute to 3 minutes, and most preferably from 90 seconds to 150 seconds. The temperature of the baking of the batter is preferably from 140°C to 180°C, more preferably from 150°C to 170°C.

Although the use of an in-line mixing device, fitted at or downstream of the injection point to blend the further additives with the batter mix to form the batter, overcomes the aforementioned problems regarding additives which are sensitive to the residence time in the batter, the use of an in-line mixing device can cause an increase in pressure. Ideally, batter should only be deposited when the baking plates are in the open configuration in the correct position beneath the batter depositor and then stopped when the plates are in the closed configuration. However, when the batter pump stops, the residual pressure generated in the static mixer causes the batter to continue to flow out of the system even when the plates are in the closed configuration causing waste.

We have found that by using a pressure retaining valve and preferably, in addition, a suckback system, this problem is alleviated or eliminated.

The presence of the pressure retaining valve substantially prevents the batter from dripping out of the batter stream when the batter pump stops and the baking plates are in the closed configuration.

A suitable pressure retaining valve is a pneumatic valve such as a pinch valve which is normally closed.

Preferably, fitted upstream of the batter depositor is a suckback cylinder adapted to be activated after the batter has been deposited in the baking mould to prevent batter dripping between batter deposits.

When the heated baking surface is a baking mould, the baking mould in the closed configuration containing the batter may conveniently be heated to form the wafer in a baking oven. In one embodiment, the baking mould may traverse the baking oven and, preferably there are a series of baking moulds disposed one after the other, continuously traversing the interior of the baking oven in the closed configuration and which after exiting the baking oven are moved to an open configuration for removing the individual wafers and depositing a further portion of batter and then moved to a closed configuration in which they traverse the oven.

Alternatively, the baking mould in the closed configuration containing the batter may be heated to form the wafer in a stationary position. Preferably, there may be two or more stationary baking moulds independent from the other(s) in the open configuration for depositing the batter, in the closed configuration for baking the batter and in the open configuration for removing the baked wafers.

The batter is conveniently fed by pumping intermittently so that the batter is deposited when the baking mould is in the open configuration and stops when the baking mould is in the closed configuration.

The wafer may be a flat wafer either having geometric shapes or cartoons character shapes, as well as alphabet letters or numbers, for example. It can also be a three dimensional shaped wafer such as, for example, a cone, a hemispherical shell, a hollow animal shape or other fancy shape.

As stated above, a batter mix for preparing wafers usually comprises from 20 to 60% flour. The batter itself commonly may also comprise at least one of the following further ingredients in addition to the batter mix: fat and/or oil, lecithin and/or emulsifiers, sugar, whole egg, salt, sodium bicarbonate, ammonium bicarbonate, skim milk powder, soy flour, yeast, and/or enzymes such as xylanases, proteases or alpha-amylase, for example. No- or low-sugar wafers usually contain about 0-10% sugar but sugar wafers may contain from 25% to 50% sugar.

Some of these ingredients may be present in the batter mix while any further batter ingredients are added to the batter mix immediately before deposition onto the heated baking surface conveniently by means of a dosing pump at an injection point in the batter stream to form the batter. The further batter ingredients are conveniently added to the batter mix within 2 minutes, preferably within 1 minute and more preferably within 30 seconds and even more preferably within 10 seconds of depositing the batter in the baking mould.

Examples of further batter ingredients which may advantageously be added to the batter mix at an injection point in the batter stream are maltodextrins, alpha-amylase, water, sugar syrups, more concentrated batter, suspensions of solids, colours, flavours, flavour precursors or enzymes. The addition of maltodextrin to the batter mix immediately before deposition into the baking mould so that it is not degraded results in a wafer which does not stick on the batter plate and produces a much crispier wafer product. The concentration of maltodextrin in the batter may be from 1% to 40% and preferably from 5% to 20% by weight. Similarly, the addition of alpha amylase to the batter mix immediately before deposition into the baking mould, so that it does not have sufficient time to react in the batter with damaged starch in the batter results in a much crisper wafer. The addition of enzymes just before batter deposition into the baking mould makes it possible to use different enzymes which would otherwise lead to undesirable changes in the batter if added to the batter earlier. The concentration of enzyme in the batter may be from 0.0005 to 0.1 % and preferably from 0.001 to 0.04 % by weight.

Often, industrial wafer plants have one batter plant for preparing the batter mix but several ovens. With regard to the addition of water, the amount of water in the batter is crucial for the final wafer texture. If different amounts of water are added to the batter mix at different ovens immediately before the deposition of the batter onto the heated baking surface, then it would be possible to have a different batter texture in each oven enabling a much higher versatility of batter texture to be achieved although only one batter mix is produced in the batter plant. For example, the amount of added water to the batter mix may range from from 5 % to 50% and preferably from 10% to 25% of the standard water addition.

Additions of colours or flavours (or reaction mixtures which generate flavour when baked in the wafer) to the batter mix immediately before the deposition of the batter onto the heated baking surface, would also increase the versatility of the ovens whereby wafers having a variety of colours or flavours may be produced although only one batter mix is produced in the batter plant. The concentration of colour or flavour in the batter may vary hugely depending on the type of colour and flavour and whether they are contained in a carrier material. The colours to be added may be suspended or dissolved in water or sugar solution. A skilled person would be able to determine an appropriate level depending on the colour or flavour to be added taking into account any appropriate legislation. For example, the concentration of colour or flavour may be from from 5ppm to 100 ppm and preferably from 10 ppm to 40ppm based on the weight of the batter if the material is not diluted/or suspended in water and/or sugar syrups.

For example, if one or more further batter ingredients, e.g. water, colour or flavour, are to be added in different amounts to a batter mix in a system using a plurality of baking ovens, each further batter ingredient may conveniently be stored in a separate storage vessel each with a dosing pump and separate feed pipes for the different amounts of further batter ingredients to be added to the batter mix to form the batter immediately before the deposition of the batter onto the heated baking surfaces at different ovens to give the desired batter in a specific oven.

It should be understood that if it is not desired to add any one or more of the further batter ingredient for any particular oven, then the appropriate dosing pump would be shut down.

The duration of the baking of the batter in the baking mould as it passes through the baking oven is preferably from 90 seconds to 150 seconds and the temperature is preferably from 150°C to 170°C.

According to a second embodiment of the present invention there is provided an apparatus for preparing a wafer which comprises a storage vessel for a batter mix fitted with a batter feed pump for intermittent action, a storage vessel for further batter ingredients fitted with a dosing pump timed to run only when the batter feed pump runs, a feed line for the batter, a feed line for the further batter ingredients, an injection point connected to the dosing pump for feeding further batter ingredients into the feed line for the batter, and a heated baking surface, means for depositing batter onto the heated baking surface, means for heating the baking surface to a predetermined temperature for baking the batter to form the wafer, and means for removal of the baked wafer from the heated baking surface characterised in that an in-line mixing device is fitted at or downstream of the injection point.

The heated baking surface may be a wafer baking mould. The wafer baking mould may conveniently comprise two metal plates having upper and lower sections at least one of which is adapted to be moved relative to the other so that the baking mould can move from an open configuration for depositing the batter to a closed configuration for baking the batter and to an open configuration for removal of the baked wafers. Preferably the surface of one or both of the baking plates is engraved with a suitable pattern which is transferred to the surface of the wafer during baking.

Preferably, the in-line mixing device is a static mixer.

Preferably, a presssure-retaining valve is fitted downstream of the static mixer to prevent flow of batter onto the heated baking surface when the batter pump stops.

The pressure retaining valve is preferably a pneumatic valve, e.g. a pinch valve.

Advantageously, fitted upstream of the batter depositor is a suckback cylinder adapted to be activated after the batter has been deposited onto the heated baking surface.

Depending on the nature of the batter feed pump and the dosing pump for further ingredients, it may be advantageous to include a non-return valve between the pumps and the injection point to maintain pressure. The presence of a non return valve in each pump flow outlet stops the flow from one pump going back up the outlet pipe of the other.

The means for depositing batter in the baking mould may be provided by a batter arm, well known to those skilled in the art, which is a pipe spanning the open batter plate with a series of small holes spaced to supply a series of streams of batter in rows across the width of the open bottom plate. The pipe may have a diameter of from 15mm to 40mm with from 4 to 40 holes having a variable diameter from 1.0mm to 10.0mm.

In one embodiment, a suitable means for heating the baking mould is a baking oven which may be, for instance, gas-fired or electrically heated. Conveniently, the baking mould is adapted to traverse the baking oven in the closed configuration for baking the batter

Advantageously, there are a series of baking moulds disposed one after the other, adapted to continuously traverse the interior of the baking oven in the closed configuration for baking to form the wafer, and on exiting the baking oven, adapted to be moved to an open configuration for removing the individual wafers and depositing a further portion of batter. Another suitable means for heating the baking moulds traversing the baking oven is by means of invidividually electrically heated plates.

In another embodiment, the baking mould containing the batter is adapted to be heated by a heating means in a stationary position. Conveniently there are two or more stationary baking moulds independent from the other(s) in the open configuration for depositing the batter, in the closed configuration for baking the batter and in the open configuration for removing the baked wafers.

Other suitable means for heating the baking moulds in a stationary position may comprise
a) a low frequency induction heating system embedded into the top and lower plates of each mould,
b) a system of steam heated pipes disposed in the body of the baking plate, or
c) a system of pipes incorporated into the baking plates, said pipes conveying a pumped hot fluid.

The present invention enables the creation of crispier wafers by the addition of materials sensitive to the residence time in the batter. In addition, the present invention improve the versatility of the wafer making process where there is one batter plant and a plurality of ovens so that a variety of wafer textures by adding water immediately before the deposition stage into the baking mould so that the batter plant would be able to continue to produce one single batter for all ovens. The present invention also enables the production of wafers having a variety of flavours and/or colours by adding flavours or colours immediately before the deposition stage onto the heated baking surface and not at the batter plant so that every oven can have different colour and/or flavour.

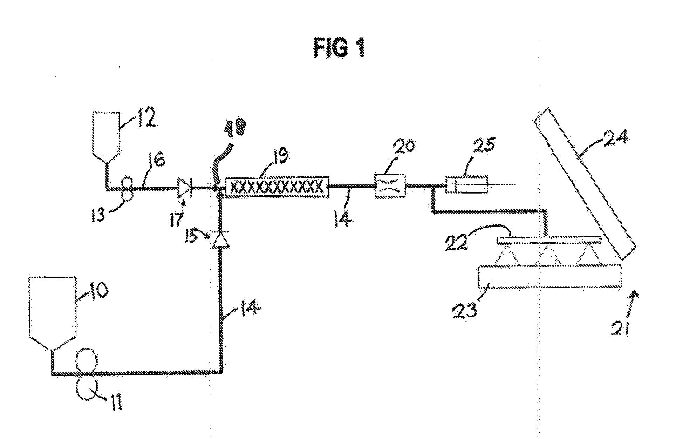

The present invention is further illustrated with reference to the accompanying drawing in which Fig 1 depicts an apparatus for depositing batter in a baking mould.

Referring to the drawing, a storage tank (10) for a batter mix is provided with a feed pump (11) adapted to run intermittently. A storage vessel (12) for a further batter ingredient is provided with a dosing pump (13) adapted to run at the same time as the feed pump (11). A batter feed pipe (14) fitted with a non-return valve (15) for transporting the batter mix and an additive feed pipe (16) fitted with a non-return valve (17) for transporting the additive meet at an injection point (18) for injecting the additive into the batter mix. Immediately downstream of the injection point (18) in the batter feed pipe (14) is an in-line static mixer (19) for blending the additive with the batter mix to form the batter. Downstream of the static mixer is a pinch valve (20). Downstream of the pinch valve the batter feed pipe (14) leads to a batter arm (22), positioned to deposit batter into the baking mould (21). The baking mould comprises a lower engraved wafer baking plate (23) and an upper engraved wafer baking plate (24) as it traverses (in a direction coming out of the drawing) a wafer oven (not shown) by travelling from one end to the other and which plates (23), (24) are adapted to be opened and closed in the front entrance of the wafer oven for the depositing of the batter and removal of the individual wafers.

A suck-back cylinder (25) is fitted between the pinch valve (20) and the batter arm (22)

### EXAMPLES

The following Examples are illustrative of some of the products and methods of making the same falling within the scope of the present invention. They are not to be considered in any way limitative of the invention. Changes and modifications can be made with respect to the invention. That is, the skilled person will recognise many variations in these examples to cover a wide range of formulas, ingredients, processing, and mixtures to rationally adjust the naturally occurring levels of the compounds of the invention for a variety of applications.

### Example 1

A batter mix is prepared comprising 5000 g of wheat flour, 5900 g of water, 50 g of fat, 22 g of salt and 5 g of sodium bicarbonate and stored in a storage tank (10) provided with a feed pump (11) adapted to run intermittently. An additive comprising a mixture of 10g alpha-amylase made up to 1000g with water is stored in a storage vessel (12) provided with a dosing pump (13) adapted to run at the same time as the batter mix is pumped. When operating, the feed pump (11) transports the batter mix through a batter mix feed pipe (14) fitted with a non-return valve (15) to a baking mould (21) and simultaneously the dosing pump (13) transports the alpha-amylase solution through an additive feed pipe (16) fitted with a non-return valve (17) to an injection point (18) where the feed pipes (14) and (16) meet and an amount of alpha-amylase solution is injected into the batter mix in the feed pipe (14) 30 seconds before the batter is deposited in the baking mould (21), to give an enzyme concentration of alpha-amylase enzyme in the final batter of 0.0 1 % by weight.

### Composition of final batter:

| Ingredient | % | kg |
|---|---|---|
| Flour | 45.09 | 5.000 |
| Water | 53.21 | 5.900 |
| Vegetable fat | 0.45 | 0.050 |
| Salt | 0.20 | 0.022 |
| Sodium Bicarbonate | 0.05 | 0.005 |
| Alpha amylase (1% aqueous mix) | 1.00 | 0.111 |
| Total | 100 | 11.077 |

The mixture of alpha-amylase solution and batter mix then flows through a static mixer (19) where it is blended to form the batter. The batter continues to flow in the feed pipe (14) and passes through a pinch valve (20) to a batter arm (22) which deposits batter between a lower wafer baking plate (23) and an upper wafer baking plate (24) of the baking mould (21) when they are in the open position

The pinch valve (20) prevents the flow of batter to the batter arm when the batter pump stops A suckback cylinder (25) fitted after the pinch valve is activated after the end of the batter deposit to prevent batter dripping between deposits.

The baking mould (21) consists of two heated engraved metal plates having upper and lower sections arranged to open and close, one of which may be moved relative to the other, which plates traverse a wafer oven by travelling from one end to the other and which are opened at the front entrance of the wafer oven for the depositing of the batter and then closed as they pass through the baking oven for 2 minutes at 160°C to produce large flat wafer sheets with a low moisture level which are cooled and processed according to requirements. On returning to the front entrance the wafer plates open to allow the removal of the individual wafers and to allow the deposit of further batter. After the batter deposit, the feed pump (11) and the dosing pump (13) stop until the next baking moulds (21) reaches the front entrance of the wafer oven whereupon the pumps restart and the cycle recommences, i.e. the baking plates (23) and (24) open to allow the removal of the individual wafers and to allow the deposit of further batter. When the feed pump (11) and the dosing pump (13) stop, the pinch valve (20) prevents the flow of batter to the batter arm and the suckback cylinder (25) is activated to prevent batter dripping between deposits. The moisture content of the wafer leaving the oven is from 1-2%.

### Example 2

A similar procedure to that described in Example 1 is followed wherein a batter mix is prepared comprising 5000 g of wheat flour, 6000 g of water, 50 g of fat, 22 g of salt and 5 g of sodium bicarbonate and stored in a storage tank (10) provided with a feed pump (11) adapted to run intermittently. Instead of the alpha-amylase solution, water is stored in a storage vessel (12) provided with a dosing pump (13) adapted to run at the same time as the batter mix is pumped. Extra water is added to the batter mix at the injection point to give a final water content of the batter of 59%. By increasing the amount of water in the batter the density of the wafer after baking is reduced compared to a wafer baked with the original batter mix. The texture of the finished wafer is lighter, having a softer first bite, but maintaining its crispness and melting more rapidly in the mouth.

## Claims

1. A method of preparing a wafer by baking a batter which comprises preparing a batter mix comprising at least flour and water, feeding the batter mix intermittently in a batter stream to a batter depositor which deposits batter onto a heated baking surface
to bake the batter in contact with the heated baking surface for a period of from 20 seconds to 5 minutes, at 130°C to 220°C to form the wafer, and removing the wafer from the heated baking surface, **characterized in that** at an injection point (18) in the batter stream immediately upstream of the batter depositor, at least one further batter ingredient is added to the batter mix to form the batter, and **in that** the batter is fed through an in-line mixing device fitted at or downstream of the injection point (18).

2. A method according to claim 1 wherein the heated baking surface is a wafer baking mould (21).

3. A method according to claim 2 wherein the wafer baking mould (21) comprises two metal plates (23, 24) having upper and lower sections at least one of which is adapted to be moved relative to the other so that the baking mould (21) can move from an open configuration for depositing the batter to a closed configuration for baking the batter and to an open configuration for removal of the baked wafers.

4. A method according to claim 1 wherein the in-line mixing device is a static mixer (19).

5. A method according to claim 1 wherein the further batter ingredient is added at the injection point (18) in the batter stream by means of a dosing pump (13) which is timed to run only when the batter feed pump (11) (20) runs.

6. A method according to claim 1 wherein the further batter ingredient is added to the batter mix at the injection point (18) within 2 minutes of depositing the batter onto the heated baking surface.

7. A method according to claim 1 wherein a presssure-retaining valve is fitted downstream of the in-line mixing device to prevent flow of batter to the baking mould when the batter pump stops.

8. A method according to claim 7 wherein the pressure retaining valve is a pneumatic pinch valve (20).

9. A method according to claim 1 wherein, fitted upstream of the batter depositor is a suckback cylinder (25) adapted to be activated after the batter has been deposited in the baking mould to prevent batter dripping between batter deposits.

10. A method according to claim 1 wherein the further batter ingredients added to the batter mix at an injection point (18) in the batter stream is one or more of maltodextrins, alpha-amylase, water, sugar syrups, more concentrated batter, suspensions of solids, colours, flavours, flavour precursors or enzymes.

11. A method according to claim 3 wherein the baking mould (21) in the closed configuration containing the batter is heated to form the wafer in a baking oven.

12. A method according to claim 11 wherein the baking mould (21) traverses the baking oven.

13. A method according to claim 12 wherein there are a series of baking moulds (21) disposed one after the other, continuously traversing the interior of the baking oven in the closed configuration and which after exiting the baking oven are moved to an open configuration for removing the individual wafers and depositing a further portion of batter and then moved to a closed configuration in which they traverse the oven.

14. A method according to claim 11 or claim 12 wherein there is one batter plant for preparing the batter mix and a plurality of baking ovens.

15. A method according to claim 14 wherein one or more further batter ingredients are added in different amounts to the batter mix in a system using a plurality of baking ovens, each further batter ingredient is stored in a separate storage vessel each with a dosing pump and separate feed pipes for the different amounts of further batter ingredients which are added to the batter mix to form the batter immediately before the deposition of the batter onto the heated baking surfaces at different ovens to give the desired batter in a specific oven.

16. A method according to claim 14 wherein the further batter ingredients are water, colour or flavour.

17. A method according to claim 3 wherein the baking mould (21) in the closed configuration containing the batter is heated to form the wafer in a stationary position.

18. A method according to claim 17 wherein there are two or more stationary baking moulds (21) independent from the other(s) in the open configuration for depositing the batter, closed configuration for baking the batter and open configuration for removing the baked wafers.

19. A method according to claim 3 wherein the batter is fed by pumping intermittently so that the batter is deposited when the baking mould (21) is in the open configuration and stops when the baking mould (21) is in the closed configuration.

20. An apparatus for preparing a wafer which comprises a storage vessel (10) for a batter mix fitted with a batter feed pump (11) for intermittent action,
a feed line (14) for the batter, and a heated baking surface, means for depositing batter (229) onto the heated baking surface, means for heating the baking surface to a predetermined temperature for baking the batter to form the wafer, and means for removal of the baked wafer from the heated baking surface, **characterised in that** it further comprises a storage vessel (12) for further batter ingredients fitted with a dosing pump (13) timed to run only when the batter feed pump (11) runs, a feed line (16) for the further batter ingredients, and an injection point (18) connected to the dosing pump (13) for feeding further batter ingredients into the feed line (14) for the batter, wherein an in-line mixing device is fitted at or downstream of the injection point (18).

21. An apparatus according to claim 20 wherein the heated baking surface is a wafer baking mould (21).

22. An apparatus according to claim 21 wherein the wafer baking mould (21) comprises two metal plates (23, 24) having upper and lower sections at least one of which is adapted to be moved relative to the other so that the baking mould (21) can move from an open configuration for depositing the batter to a closed configuration for baking the batter and to an open configuration for removal of the baked wafers.

23. An apparatus according to claim 22 wherein the surface of one or both of the baking plates (23, 24) is engraved with a suitable pattern which is transferred to the surface of the wafer during baking.

24. An apparatus according to claim 20 wherein the in-line mixing device is static mixer (19).

25. An apparatus according to claim 20 wherein a presssure-retaining valve is fitted downstream of the in-line mixing device.

26. An apparatus according to claim 25 wherein the pressure retaining valve is a pneumatic valve (20).

27. An apparatus according to claim 20 wherein, fitted upstream of the baking mould is a suckback cylinder (25) adapted to be activated after the batter has been deposited onto the heated baking surface.

28. An apparatus according to claim 20 wherein a non-return valve (15, 17) is present between the batter feed pump (11) and the dosing pump (13) for further ingredients at the injection point (18).

29. An apparatus according to claim 21 wherein the means for heating the baking mould is a baking oven

30. An apparatus according to claim 29 wherein the baking mould (21) is adapted to traverse the baking oven in the closed configuration for baking the batter

31. An apparatus according to claim 29 wherein there are a series of baking moulds (21) disposed one after the other, adapted to continuously traverse the interior of the baking oven in the closed configuration for baking to form the wafer, and on exiting the baking oven, adapted to be moved to an open configuration for removing the individual wafers and depositing a further portion of batter.

32. An apparatus according to claim 21 wherein the baking mould (21) containing the batter is adapted to be heated by a heating means in a stationary position.

33. An apparatus according to claim 32 wherein there are two or more stationary baking moulds (21) independent from the other(s) in the open configuration for depositing the batter, closed configuration for baking the batter and open configuration for removing the baked wafers.

34. An apparatus according to claim 32 wherein the heating means comprises a low frequency induction heating system embedded into the top and lower plates of each mould.

35. An apparatus according to claim 32 wherein the heating means comprises a system of steam heated pipes disposed in the body of the baking plate.

36. An apparatus according to claim 32 wherein the heating means comprise a system of pipes incorporated into the baking plates, said pipes conveying a pumped hot fluid.

## Patentansprüche

1. Verfahren zur Zubereitung einer Waffel durch Backen eines Teiges mit den Schritten Zubereiten einer zumindest Mehl und Wasser enthaltenden Teigmischung, diskontinuierliches Zuführen der Teigmischung in einem Teigstrom zu einer Teigabgabe, die Teig auf eine beheizte Backfläche abgibt, so dass der Teig in Kontakt mit der beheizten Backfläche über einen Zeitraum von 20 Sekunden bis 5 Minuten bei 130°C bis 220°C zur Herstellung der Waffel gebacken wird, und Entnehmen der Waffel von der beheizten Backfläche, **dadurch gekennzeichnet, dass** an einer Einspritzstelle (18) in dem Teigstrom unmittelbar vor der Teigabgabe der Teigmischung mindestens eine weitere Teigzutat zur Herstellung des Teiges zugegeben wird, und dass der Teig durch eine Reihenmischvorrichtung zugeführt wird, die an oder hinter der Einspritzstelle (18) angebracht ist.

2. Verfahren gemäß Anspruch 1, wobei die beheizte Backfläche eine Waffelbackform (21) ist.

3. Verfahren gemäß Anspruch 2, wobei die Waffelbackform (21) zwei Metallplatten (23, 24) mit oberen und unteren Teilen umfasst, wovon mindestens eines relativ zu dem anderen derart bewegbar ist, dass sich die Backform (21) aus einem offenen Zustand zur Abgabe des Teiges in einen geschlossenen Zustand zum Backen des Teiges und in einen offenen Zustand zum Entnehmen der gebackenen Waffeln bewegen kann.

4. Verfahren gemäß Anspruch 1, wobei die Reihenmischvorrichtung ein feststehender Mischer (19) ist.

5. Verfahren gemäß Anspruch 1, wobei die weitere Teigzutat an der Einspritzstelle (18) in dem Teigstrom über eine Dosierpumpe (13) zugegeben wird, welche so eingestellt ist, dass sie nur dann arbeitet, wenn die Teigzuführpumpe (11) (20) arbeitet.

6. Verfahren gemäß Anspruch 1, wobei die weitere Teigzutat der Teigmischung an der Einspritzstelle (18) innerhalb 2 Minuten vor der Abgabe des Teiges auf die beheizte Backfläche zugegeben wird.

7. Verfahren gemäß Anspruch 1, wobei ein Druckrückhalteventil hinter der Reihenmischvorrichtung angebracht ist, um zu verhindern, dass Teig zu der Backform fließt, wenn die Teigpumpe angehalten wird.

8. Verfahren gemäß Anspruch 7, wobei das Druckrückhalteventil ein pneumatisches Schlauchventil (20) ist.

9. Verfahren gemäß Anspruch 1, wobei vor der Teigabgabe ein Rücksaugzylinder (25) angebracht ist, welcher betätigt werden kann, nachdem der Teig in die Backform eingebracht worden ist, um zu verhindern, dass zwischen den Teigabgaben Teig heraustropft.

10. Verfahren gemäß Anspruch 1, wobei die der Teigmischung an einer Einspritzstelle (18) in dem Teigstrom zugegebenen, weiteren Teigzutaten aus einem oder mehreren der Stoffe Maltodextrine, Alpha-Amylase, Wasser, Zuckersirup, stärker konzentriertem Teig, Suspensionen aus Feststoffen, Farben, Aromen, Aromavorstufen oder Enzymen bestehen.

11. Verfahren gemäß Anspruch 3, wobei die im geschlossenen Zustand den Teig enthaltende Backform (21) zur Herstellung der Waffel in einem Backofen beheizt wird.

12. Verfahren gemäß Anspruch 11, wobei die Backform (21) den Backofen durchläuft.

13. Verfahren gemäß Anspruch 12, wobei eine Reihe von hintereinander angeordneten Backformen (21) vorhanden ist, die kontinuierlich das Innere des Backofens im geschlossenen Zustand durchlaufen und die nach Verlassen des Backofens in einen offenen Zustand bewegt werden, um die einzelnen Waffeln zu entnehmen und eine weitere Teigportion aufzubringen, und danach in einen geschlossenen Zustand bewegt werden, in welchem sie den Ofen durchlaufen.

14. Verfahren gemäß Anspruch 11 oder Anspruch 12, wobei es eine Teiganlage zur Zubereitung der Teigmischung und mehrere Backöfen gibt.

15. Verfahren gemäß Anspruch 14, wobei der Teigmischung eine oder mehrere weitere Teigzutaten in unterschiedlichen Mengen in einem System unter Verwendung von mehreren Backöfen zugegeben werden, wobei jede weitere Teigzutat in einem eigenen Speicherbehälter jeweils mit einer Dosierpumpe und getrennten Zuführrohren für die unterschiedlichen Mengen an weiteren Teigzutaten gelagert wird, welche der Teigmischung zur Herstellung des Teiges unmittelbar vor dem Aufbringen des Teiges auf die beheizten Backflächen in verschiedenen Öfen zugegeben werden, um den gewünschten Teig einem speziellen Ofen zuzuführen.

16. Verfahren gemäß Anspruch 14, wobei die weiteren Teigzutaten aus Wasser, Farbe oder Aroma bestehen.

17. Verfahren gemäß Anspruch 3, wobei die im geschlossenen Zustand den Teig enthaltende Backform (21) beheizt wird, um die Waffel in einer feststehenden Position herzustellen.

18. Verfahren gemäß Anspruch 17, wobei zwei oder mehr stationäre Backformen (21) unabhängig von der/den anderen im offenen Zustand zur Abgabe des Teiges, im geschlossenen Zustand zum Backen des Teiges und im offenen Zustand zum Entnehmen der gebackenen Waffeln vorliegen.

19. Verfahren gemäß Anspruch 3, wobei der Teig durch stoßweises Pumpen derart zugeführt wird, dass der Teig aufgebracht wird, wenn sich die Backform (21) im offenen Zustand befindet, und gestoppt wird, wenn sich die Backform (21) im geschlossenen Zustand befindet.

20. Vorrichtung zur Zubereitung einer Waffel, mit einem Speicherbehälter (10) für eine Teigmischung, der mit einer Teigzuführpumpe (11) für diskontinuierlichen Betrieb ausgerüstet ist, einer Zuführleitung (14) für den Teig und einer beheizten Backfläche, einer Einrichtung zur Abgabe von Teig (22) auf die beheizte Backfläche, einer Einrichtung zum Beheizen der Backfläche auf eine vorgegebene Temperatur zum Backen des Teiges zur Waffelherstellung sowie einer Einrichtung zur Entnahme der gebackenen Waffel von der beheizten Backfläche, **dadurch gekennzeichnet, dass** sie weiterhin einen Speicherbehälter (12) für weitere Teigzutaten mit einer Dosierpumpe (13) umfasst, die so eingestellt ist, dass sie nur arbeitet, wenn die Teigzuführpumpe (11) arbeitet, eine Zuführleitung (16) für die weiteren Teigzutaten und eine mit der Dosierpumpe (13) verbundene Einspritzstelle (18) zum Zuführen weiterer Teigzutaten in die Zuführleitung (14) für den Teig, wobei eine Reihenmischvorrichtung an oder hinter der Einspritzstelle (18) angebracht ist.

21. Vorrichtung gemäß Anspruch 20, wobei die beheizte Backfläche eine Waffelbackform (21) ist.

22. Vorrichtung gemäß Anspruch 21, wobei die Waffelbackform (21) zwei Metallplatten (23, 24) mit oberen und unteren Teilen umfasst, wovon mindestens eines relativ zu dem anderen derart bewegbar ist, dass sich die Backform (21) aus einem offenen Zustand zur Abgabe des Teiges in einen geschlossenen Zustand zum Backen des Teiges und in einen offenen Zustand zum Entnehmen der gebackenen Waffeln bewegen kann.

23. Vorrichtung gemäß Anspruch 22, wobei die Oberfläche einer oder beider Backplatten (23, 24) mit einem geeigneten Muster graviert ist, das beim Backen auf die Oberfläche der Waffel übertragen wird.

24. Vorrichtung gemäß Anspruch 20, wobei die Reihenmischvorrichtung ein feststehender Mischer (19) ist.

25. Vorrichtung gemäß Anspruch 20, wobei ein Druckrückhalteventil hinter der Reihenmischvorrichtung angebracht ist.

26. Vorrichtung gemäß Anspruch 25, wobei das Druckrückhalteventil ein Druckluftventil (20) ist.

27. Vorrichtung gemäß Anspruch 20, wobei der Backform ein Rücksaugzylinder (25) vorgeschaltet ist, der betätigt werden kann, nachdem der Teig auf die beheizte Backfläche aufgebracht worden ist.

28. Vorrichtung gemäß Anspruch 20, wobei ein Sperrventil (15, 17) zwischen der Teigzuführpumpe (11) und der Dosierpumpe (13) für weitere Zutaten an der Einspritzstelle (18) vorhanden ist.

29. Vorrichtung gemäß Anspruch 21, wobei die Einrichtung zum Beheizen der Backform ein Backofen ist.

30. Vorrichtung gemäß Anspruch 29, wobei die Backform (21) den Backofen im geschlossenen Zustand zum Backen des Teiges durchlaufen kann.

31. Vorrichtung gemäß Anspruch 29, wobei eine Reihe von hintereinander angeordneten Backformen (21), die kontinuierlich das Innere des Backofens im geschlossenen Zustand zum Backen der Waffel durchlaufen können und die beim Verlassen des Backofens in einen offenen Zustand bewegt werden können, um die einzelnen Waffeln zu entnehmen und eine weitere Teigportion aufzubringen.

32. Vorrichtung gemäß Anspruch 21, wobei die den Teig enthaltende Backform (21) von einer Heizeinrichtung in einer feststehenden Position beheizt werden kann.

33. Vorrichtung gemäß Anspruch 32, wobei zwei oder mehr voneinander unabhängige, feststehende Backformen (21) im offenen Zustand zur Abgabe des Teiges, im geschlossenen Zustand zum Backen des Teiges und im offenen Zustand zum Entnehmen der gebackenen Waffeln vorhanden sind.

34. Vorrichtung gemäß Anspruch 32, wobei die Heizeinrichtung ein Niederfrequenzinduktionsheizsystem umfasst, das in die oberen und unteren Platten jeder Form eingebettet ist.

35. Vorrichtung gemäß Anspruch 32, wobei die Heizeinrichtung ein System von in dem Körper der Backplatte angeordneten, dampfbeheizten Rohren umfasst.

36. Vorrichtung gemäß Anspruch 32, wobei die Heizeinrichtung ein in die Backplatten eingebautes Röhrensystem umfasst, wobei die Rohre eine geförderte, heiße Flüssigkeit transportieren.

## Revendications

1. Un procédé pour la préparation d'une gaufre par cuisson d'une pâte, le procédé comprenant les étapes consistant à préparer un mélange de pâte comprenant au moins de la farine et de l'eau, approvisionner un mélange de pâte de façon intermittente dans un flux de pâte vers une déposeuse à pâte qui dépose de la pâte sur une surface de cuisson chauffée pour cuire la pâte en contact avec la surface de cuisson chauffée pendant une période allant de 20 secondes à 5 minutes à une température de 130°C à 220°C pour former la gaufre, et enlever la gaufre de la surface de cuisson chauffée, **caractérisé en ce que**, en un point d'injection (18) dans le flux de pâte immédiatement en amont de la déposeuse à pâte, au moins un ingrédient de pâte supplémentaire est ajouté au mélange de pâte pour former la pâte, et **en ce que** la pâte est approvisionnée à travers un dispositif de mélange en série installé au point d'injection (18) ou en aval de celui-ci.

2. Un procédé selon la revendication 1, dans lequel la surface de cuisson chauffée est un moule (21) de cuisson de gaufres.

3. Un procédé selon la revendication 2, dans lequel le moule (21) de cuisson de gaufres comprend deux plaques (23, 24) en métal ayant des sections supérieure(s) et inférieure(s), dont au moins une est conçue pour être déplacée par rapport à l'autre, de sorte que le moule (21) de cuisson peut se déplacer d'une configuration ouverte pour déposer la pâte à une configuration fermée pour cuire la pâte, et à une configuration ouverte pour enlever les gaufres cuites.

4. Un procédé selon la revendication 1, dans lequel le dispositif de mélange en série est un mélangeur statique (19).

5. Un procédé selon la revendication 1, dans lequel l'ingrédient de pâte supplémentaire est ajouté au point d'injection (18) dans le flux de pâte au moyen d'une pompe (13) de dosage qui est ajustée pour fonctionner seulement lorsque la pompe (11) (20) d'alimentation de pâte fonctionne.

6. Un procédé selon la revendication 1, dans lequel l'ingrédient de pâte supplémentaire est ajouté au mélange de pâte au point (18) d'injection dans l'intervalle de 2 minutes par rapport au dépôt de la pâte sur la surface de cuisson chauffée.

7. Un procédé selon la revendication 1, dans lequel une valve de retenue de pression est installée en aval du dispositif de mélange en série pour empêcher un flux de pâte vers le moule de cuisson lorsque la pompe à pâte s'arrête.

8. Un procédé selon la revendication 7, dans lequel la valve de retenue de pression est une valve (20) à manchon pneumatique.

9. Un procédé selon la revendication 1, dans lequel un cylindre (25) d'aspiration de retour est installé en amont de la déposeuse à pâte et est conçu pour être activé après que la pâte a été déposée dans le moule de cuisson pour empêcher la pâte de s'écouler entre les déposeuses à pâte.

10. Un procédé selon la revendication 1, dans lequel les ingrédients de pâte supplémentaires ajoutés au mélange de pâte en un point (18) d'injection dans le flux de pâte est un des éléments suivants : maltodextrine, alpha-amylase, eau, sirops de sucre, pâte plus concentrée, suspensions de solides, colorants, arômes, précurseurs ou enzymes de goût.

11. Un procédé selon la revendication 3, dans lequel le moule (21) de cuisson, dans la configuration fermée contenant la pâte, est chauffé pour former la gaufre dans un four de cuisson.

12. Un procédé selon la revendication 11, dans lequel le moule (21) de cuisson traverse le four de cuisson.

13. Un procédé selon la revendication 12, dans lequel il y a une série de moules (21) de cuisson disposés les uns après les autres, traversant de façon continue l'intérieur du four de cuisson dans la configuration fermée et qui, après être sortis du four de cuisson, sont mis dans une configuration ouverte pour enlever les gaufres individuelles et pour déposer une portion supplémentaire de pâte, et sont ensuite mis dans une configuration fermée dans laquelle ils traversent le four.

14. Un procédé selon la revendication 11 ou 12, dans lequel il y a un équipement de pâte pour préparer le mélange de pâte et une pluralité de fours de cuisson.

15. Un procédé selon la revendication 14, dans lequel un ou plusieurs ingrédients de pâte supplémentaires sont ajoutés dans des quantités différentes au mélange de pâte dans un système utilisant une pluralité de fours, chaque ingrédient de pâte supplémentaire est stocké dans un récipient de stockage séparé ayant respectivement une pompe de dosage et des tuyaux d'alimentation séparés pour les différentes quantités d'ingrédients de pâte supplémentaires qui sont ajoutées au mélange de pâte pour former la pâte immédiatement avant le dépôt de la pâte sur les surfaces de cuisson chauffées dans différents fours pour mettre la pâte désirée dans un four spécifique.

16. Un procédé selon la revendication 14, dans lequel les ingrédients de pâte supplémentaires sont de l'eau, du colorant ou de l'arôme.

17. Un procédé selon la revendication 3, dans lequel le moule (21) de cuisson, dans la configuration fermée contenant la pâte, est chauffé pour former la gaufre dans une position stationnaire.

18. Un procédé selon la revendication 17, dans lequel il y a deux ou plusieurs moules (21) de cuisson stationnaires indépendants de l'autre / des autres dans la configuration ouverte pour déposer la pâte, dans la configuration fermée pour cuire la pâte, et dans la configuration ouverte pour enlever les gaufres cuites.

19. Un procédé selon la revendication 3, dans lequel la pâte est alimentée en pompant de façon intermittente de sorte que la pâte est déposée lorsque le moule (21) de cuisson est dans la configuration ouverte et qu'elle s'arrête lorsque le moule (21) de cuisson est dans la configuration fermée.

20. Un appareil pour préparer une gaufre qui comprend un récipient (10) de stockage pour un mélange de pâte équipé d'une pompe (11) d'alimentation de pâte pour un fonctionnement intermittent, d'une ligne d'alimentation (14) pour la pâte, et d'une surface de cuisson chauffée, de moyens pour déposer la pâte (229) sur la surface de cuisson chauffée, de moyens pour chauffer la surface de cuisson à une température prédéterminée pour cuire la pâte pour former la gaufre, et de moyens pour enlever la gaufre cuite de la surface de cuisson chauffée, **caractérisé en ce qu'**il comprend en outre un récipient (12) de stockage pour des ingrédients de pâte supplémentaires équipé d'une pompe (13) de dosage ajustée pour fonctionner seulement lorsque la pompe (11) d'alimentation de pâte fonctionne, une ligne d'alimentation (16) pour les ingrédients de pâte supplémentaires, et un point (18) d'injection relié à la pompe (13) de dosage pour fournir des ingrédients de pâte supplémentaires dans la ligne (14) d'alimentation pour la pâte, dans lequel un dispositif de mélange en série est installé au point (18) d'injection ou en aval de celui-ci.

21. Un appareil selon la revendication 20, dans lequel la surface de cuisson chauffée est un moule (21) de cuisson de gaufres.

22. Un appareil selon la revendication 21, dans lequel le moule (21) de cuisson de gaufres comprend deux plaques (23, 24) en métal ayant des sections supérieure(s) et inférieure(s), dont au moins une est conçue pour être déplacée par rapport à l'autre, de sorte que le moule (21) de cuisson peut se déplacer depuis une configuration ouverte pour déposer la pâte jusqu'à une configuration fermée pour cuire la pâte et jusqu'à une configuration ouverte pour enlever les gaufres cuites.

23. Un appareil selon la revendication 22, dans lequel un motif adéquat est gravé sur la surface d'une plaque ou des deux plaques (23, 24) de cuisson, lequel motif est transféré sur la surface de la gaufre durant la cuisson.

24. Un appareil selon la revendication 20, dans lequel le dispositif de mélange en série est un mélangeur (19) statique.

25. Un appareil selon la revendication 1, dans lequel une valve de retenue de pression est installée en aval du dispositif de mélange en série.

26. Un appareil selon la revendication 25, dans lequel la valve de retenue de pression est une valve (20) pneumatique.

27. Un appareil selon la revendication 20, dans lequel un cylindre (25) d'aspiration de retour est installé en amont du moule de cuisson et est conçu pour être activé après que la pâte a été déposée sur la surface de cuisson chauffée.

28. Un appareil selon la revendication 20, dans lequel une valve anti-retour (15, 17) est présente entre la pompe (11) d'alimentation de pâte et la pompe (13) de dosage pour des ingrédients supplémentaires au point (18) d'injection.

29. Un appareil selon la revendication 21, dans lequel le moyen pour chauffer le moule de cuisson est un four de cuisson.

30. Un appareil selon la revendication 29, dans lequel le moule (21) de cuisson est conçu pour traverser le four de cuisson dans la configuration fermée pour cuire la pâte.

31. Un appareil selon la revendication 29, dans lequel il y a une série de moules (21) de cuisson disposés les uns après les autres, qui sont conçus pour traverser de façon continu l'intérieur du four de cuisson dans la configuration fermée pour cuire de manière à former la gaufre, et qui, au moment de quitter le four de cuisson, sont conçus pour être déplacés dans une configuration ouverte pour enlever les gaufres individuelles et déposer une autre portion de pâte.

32. Un appareil selon la revendication 21, dans lequel le moule (21) de cuisson contenant la pâte est conçu pour être chauffé par un moyen de chauffage dans une position stationnaire.

33. Un appareil selon la revendication 32, dans lequel il y a deux ou plusieurs moules (21) de cuisson stationnaires, indépendants de l'autre / des autres dans la configuration ouverte pour déposer la pâte, dans la configuration fermée pour cuire la pâte et dans la configuration ouverte pour enlever les gaufres cuites.

34. Un appareil selon la revendication 32, dans lequel le moyen de chauffage comprend un système de chauffage à induction à basse fréquence qui est inclus dans les plaques supérieure(s) et inférieure(s) de chaque moule.

35. Un appareil selon la revendication 32, dans lequel le moyen de chauffage comprend un système de tuyaux chauffés à la vapeur disposés dans le corps de la plaque de cuisson.

36. Un appareil selon la revendication 32, dans lequel les moyens de chauffage comprennent un système de tuyaux incorporés dans les plaques de cuisson, lesdits tuyaux transportant un fluide chaud pompé.
